# EUROPÄISCHE PATENTSCHRIFT

(11) **EP 2 268 176 B1**
(45) Veröffentlichungstag und Bekanntmachung des Hinweises auf die Patenterteilung: **16.01.2013**
(21) Anmeldenummer: 09737787.3
(22) Anmeldetag: 31.03.2009
(51) Int. Cl.: A47J 31/44

(54) **VERFAHREN ZUR ZUBEREITUNG UND VERABREICHUNG VON MILCHSCHAUM ODER EINES GETRÄNKS, VORRICHTUNG ZUR AUSÜBUNG DES VERFAHRENS, ESPRESSOMASCHINE MIT EINER SOLCHEN VORRICHTUNG**
METHOD FOR PREPARING AND DISPENSING MILK FOAM OR A DRINK, DEVICE FOR CARRYING OUT THE METHOD, ESPRESSO MACHINE COMPRISING SUCH A DEVICE
PROCÉDÉ DE PRÉPARATION ET DE DISTRIBUTION DE MOUSSE DE LAIT OU D'UNE BOISSON, DISPOSITIF POUR LA MISE EN OEUVRE DU PROCÉDÉ, MACHINE EXPRESSO PRÉSENTANT UN TEL DISPOSITIF

(30) Priorität: 30.04.2008 DE 102008021778
(43) Veröffentlichungstag der Anmeldung: 05.01.2011
(73) Patentinhaber: Eugster/Frismag AG, 8580 Amriswil (CH)
(72) Erfinder: FISCHER, Daniel, 8590 Romanshorn (CH); BRENDLE, Christian, 8586 Erlen (CH)
(74) Vertreter: Schubert, Siegmar
(86) Internationale Anmeldenummer: PCT/EP2009/002358
(87) Internationale Veröffentlichungsnummer: WO 2009/132743

(56) Entgegenhaltungen:
- EP-A- 0 509 505
- EP-A- 2 025 270
- WO-A-2004/089173
- DE-A1-102004 063 278
- DE-B3-102006 008 341

## Beschreibung

Die Erfindung nach Anspruch 1 geht aus von einem Verfahren zur Zubereitung und Verabreichung von Milchschaum oder eines Getränks aus Milchpulver bzw. selbstlöslichem Getränkezubereitungspulver nach dem Oberbegriff des Anspruchs 1.

Für beide obige Zubereitungsvarianten wird also selbstlösliches Pulver verwendet, insbesondere Kakaopulver für ein heißes Kakaogetränk.

Ein weiterer Aspekt der Erfindung bezieht sich auf eine Vorrichtung gemäß dem Oberbegriff des Anspruchs 2 zur Ausübung des obigen Verfahrens.

Noch ein weiterer Aspekt der Erfindung ist eine Espressomaschine mit einer solchen Vorrichtung nach Anspruch 17.

Unter dem Begriff Espressomaschine soll in diesem Text auch eine Kaffeemaschine verstanden werden, die in üblicher Weise einen Frischwasserbehälter, einen Wassererhitzer, insbesondere in Form eines Durchlauferhitzers, einen Heißwasserdruckerzeuger, insbesondere als Pumpe stromaufwärts des Durchlauferhitzers, eine Brüheinrichtung und wenigstens eine mit dieser in Verbindung stehendes Ablaufrohr für Espresso bzw. Kaffee umfasst, unter dem zum Beispiel eine Tasse als Auffanggefäß aufgestellt werden kann. Aus dem Auffanggefäß wird der Espresso bzw. gebrühte Kaffee in der Regel konsumiert.

Um Getränke aus Pulver mit kaltem oder heißem Wasser direkt in einem Gefäß zu bereiten, welches auch zum Konsum des Getränks verwendet werden kann, ist ein Abgabeapparat bekannt, der zwei oder mehr Düsen aufweist, die mit einem Wasserbehälter und einer Pumpe in Verbindung stehen und so angeordnet sind, dass jede Düse einen Flüssigkeitsstrahl in das Gefäß an einer Abgabestation einspritzt (EP-A-0 060 645). Die Düsen sind gleichmäßig um eine zentrale Achse angeordnet, wobei jede Düse in einer zur zentralen Achse beabstandeten Ebene gegenüber der Vertikalen geneigt ist. Die aus den Düsen ausströmenden Flüssigkeitsstrahlen treffen in dem Gefäß auf einen Bereich an der Innenwand oder in deren Nähe. Eine weitere Düse kann in der zentralen Achse vorgesehen sein. Mit den äußeren geneigt tangential angeordneten Düsen werden Wasserstrahlen erzeugt, die so auf das Pulvermaterial am Boden des Gefäßes treffen, dass dieses mit dem abgegebenen Wasser in umlaufende wirbelnde Bewegung versetzt wird, um rasch aufgelöst zu werden. Durch den Flüssigkeitsdruck des gepumpten Wassers wird auch Luft mit den Wasserstrahlen mitgerissen, womit das sich bildende Getränk, insbesondere heiße Schokolade, aufgeschäumt werden kann. Jedoch verbleibt das bereitete Getränk, auch aufgeschäumte Schokolade, offenbar bis zu seinem Konsum in dem Gefäß, in dem es nach Eindosierung des Pulvermaterials bereitet wurde.

Zur Milchschaumerzeugung aus selbstlöslichem Milchpulver mit heißem Wasser, um insbesondere einen Cappuccino hoher Güte bereitzustellen, ist bereits eine Kaffeemaschine mit einer Milchschaumerzeugungseinrichtung bekannt (DE 10 2006 008 341 B3). Ein Heißwasserbrausekopf dieser Milchschaumerzeugungseinrichtung weist nach unten gerichtete und unten offene Heißwasserkanäle auf, von denen einige nahe einer äußeren zylindrischen Mantelfläche des Heißwasserbrausekopfs ganz oder zumindest in einem unteren Abschnitt gegenüber der Senkrechten in Umfangsrichtung der Mantelfläche geneigt sind und bevorzugt zusätzlich radial nach außen geneigt sind. Die Heißwasserkanäle stehen über eine Heißwasserverteilkammer in dem Heißwasserbrausekopf mit dem Heißwasserdruckerzeuger und dem Wassererhitzer der Kaffeemaschine in Verbindung. Damit wird zur Milchschaumbereitung erreicht, dass aus den Heißwasserkanälen Heißwasserstrahlen mit einem Drall in Umfangsrichtung des Heißwasserbrausekopfs austreten und auf das Milchpulver treffen, was die Durchmischung des Pulvers mit dem Heißwasser sowie das fast zeitgleiche Aufschäumen fördert. Der Milchschaum wird in einem unter dem Heißwasserbrausekopf auf einem Fuß der Kaffeemaschine gestellten Aufschäumgefäß erzeugt und kann anschließend mit Espresso oder Kaffee zusammengeführt werden, der in der gleichen Maschine bereitet wurde. Zur Milchschaumerzeugung steht das Aufschäumgefäß, das zylindrisch ausgebildet sein kann, horizontal und vertikal ausgerichtet auf dem horizontalen Fuß. Erst anschließend wird er gegebenenfalls zum Zusammenführen des Milchschaums mit dem Espresso oder Kaffee manuell gekippt.

Bei Espressomaschinen mit Dampfdüsen ohne den oben beschriebenen Heißwasserbrausekopf wird zum Aufschäumen von Milch zur Zubereitung von Cappuccino der Auslass der Dampfdüse von Hand so über der Oberfläche von Milch geführt, die sich in einem Gefäß befindet, dass beim Ausströmen des Dampfes eine Drei-Phasen-Zone: Dampf-Luft-Milch gebildet wird, wobei der Milchschaum entsteht. Diese Zubereitungsart wird jedoch meist nur von professionellen Benutzern optimal beherrscht.

Zum Stand der Technik gehört als Zubereitungsgefäß ein Portionsbehälter, der als Topf ausgebildet ist und dessen oben offene Seite zum Erwärmen einer in dem Portionsbehälter befindlichen Speisenportion mit einem Deckel als Spritzschutz abgedeckt ist (DE 10 2004 063 278 A1). Zum Erwärmen kann der Portionsbehälter auf eine Halterung in Form einer Abstellfläche abgestellt werden. Die Halterung weist vorzugsweise Fixiermittel auf, durch die der Portionsbehälter an, auf oder in der Halterung fixiert werden kann. Die in dem Portionsbehälter erwärmte Speise wird normalerweise direkt aus diesem heraus verzehrt, braucht also nicht ausgeschüttet zu werden.

Bei einer weiteren bekannten Vorrichtung zum Aufschäumen und Erhitzen von Milch mit einer Dampfleitung, die einen Dampferzeuger mit einem Dampfrohr zum Eintauchen in die Milch verbindet und die mit einer selektiv verschließbaren Luftzufuhröffnung versehen ist, ragt ein vorderes bzw. unteres Ende des Dampfrohrs von oben in einen frei aufgestellten Behälter, der eine Ausgussschnaupe aufweist (EP 2 025 270 A2). Der Behälter muss zum Entleeren in üblicher Weise gehandhabt werden.

Bei einer ähnlichen Anordnung eines Dampfrohrs, welches mit einem Endabschnitt in einen als Zubereitungsgefäß dienenden Behälter mit einer Ausgussschnaupe ragt, ist der Behälter offenbar frei aufgestellt (WO 2004/089173 A).

In einer anderen Vorrichtung zum Aufschäumen eines Getränks, welches in einem auf einer Basis einer Kaffeemaschine aufgestellten Behälter enthalten ist, ragt in den oben offenen Behälter ein Laminierungselement hinein, welches sich an eine mit dem Laminierungselement verbundene Dampfdüsenanordnung nach unten anschließt (EP 0 509 505 A). Zur Entnahme des aufgeschäumten Getränks ist der Behälter in üblicher Weise zu handhaben.

Der vorliegenden Erfindung liegt die Aufgabe zugrunde, einfach ohne hohe Anforderungen an die Geschicklichkeit des Bedienungspersonals aus Milchpulver verbesserten Milchschaum zur weiteren Verwendung, insbesondere zur Cappuccinoherstellung, bzw. generell aus selbstlöslichem Pulver ein Heißgetränk zu erzeugen, der bzw. das nicht direkt aus dem Aufschäumgefäß bzw. Zubereitungsgefäß zu konsumieren ist.

Diese Aufgabe wird durch das in Anspruch 1 angegebene Verfahren gelöst.

Somit wird nicht nur aus dem Milchpulver bzw. selbstauflösenden Getränkezubereitungspulver, das sich in dem Zubereitungsgefäß befindet, mit dem aus dem Heißwasserkanal ausströmenden Heißwasserstrahl bzw. bevorzugt mit den aus den Heißwasserkanälen ausströmenden Heißwasserstrahlen gut weiter verwendbarer Milchschaum bzw. anderweitig in einem ansprechenden Gefäß darbietbares Getränk bereitet, sondern der Schaum bzw. das Getränk wird zeitnah in das zur weiteren Verwendung des Schaums bzw. Darbietung des Getränks vorgesehene Gefäß geleitet, das hier als Auffanggefäß dient, ohne eine Manipulation durch Bedienungspersonal zu erfordern. Die guten geschmacklichen Eigenschaften des bereiteten Schaums bzw. Getränks bleiben weitgehend erhalten. Sowohl das Zubereitungsgefäß als auch das Auffanggefäß können an ihre Zwecke optimiert angepasst werden.

Hierzu wird ein Zubereitungsgefäß verwendet, das einen seitlich und/oder nach unten geführten Auslauf oder eine aus dem oberen Randbereich des Zubereitungsgefäßes ausgeformte Ausgussschnaupe aufweist, hierzu auch Anspruch 10, wobei der Auslauf bzw. die Ausgussschnaupe nach Größe und Form einen kontrollierten Auslaufvorgang des in dem Zubereitungsgefäß bereiteten Milchschaums, der verhältnismäßig träge fließt, oder aufgeschäumten Heißgetränks, wie heiße Schokolade, gewährleistet, ohne Handhabung und/oder Ästhetik des in der Regel zum Genuss des Endprodukts verwendeten Auffanggefäßes zu stören.

Der Milchschaum bzw. das Getränk fließt lediglich durch Einwirkung der Heißwasserstrahlen und der Schwerkraft aus dem Zubereitungsgefäß in das Auffanggefäß, wobei das Zubereitungsgefäß in einer optimierten Stellung fixiert ist, während das Milchpulver bzw. lösliche Getränkezubereitungspulver mit den Heißwasserstrahlen beaufschlagt wird.

Die dem mit den Heißwasserstrahlen bereiteten Milchschaum oder Getränk gleichzeitig mitgeteilte kinetische Energie verbessert den Transport des Milchschaums bzw. Getränks in das Auffanggefäß, insbesondere wenn der Milchschaum bzw. das Getränk in dem Zubereitungsgefäß in Drehbewegung versetzt wird.

Eine zur Lösung der oben genannten Aufgabe geeignete Vorrichtung, mit der das erfindungsgemäße Verfahren ausgeübt wird, kann generell in einem Einzelgerät für alle oben genannten Funktionen realisiert werden oder in einer Espresso- bzw. Kaffeemaschine integriert sein, siehe Anspruch 17. Die Vorrichtung kann zur Bereitung sowohl von Milchschaum als auch von Getränk verwendet werden, wozu lediglich der Heißwasserstrahldruck zu bemessen bzw. einzustellen ist, was an dem Heißwasserdruckerzeuger, insbesondere der Wasserpumpe, erfolgen kann. Wenn ein Heißwasserstrahldruck für Milchschaumerzeugung optimiert ist, braucht dieser zur Getränkebereitung lediglich herabgesetzt zu werden. Im letzteren Fall wird mit den Heißwasserstrahlen weniger Luft mit eingezogen, was die Schaumbildung herabsetzt bzw. nicht auftreten lässt.

Mit der lösbaren Anbringung und Positionierung des Zubereitungsgefäßes bzw. Aufschäumgefäßes an der Vorrichtung gemäß Anspruch 2 wird zunächst erreicht, dass das Zubereitungsgefäß in einer Lage an der Vorrichtung bezüglich des Heißwasserstrahlerzeugers zuverlässig gehalten wird, in der Milchschaum bzw. ein Getränk gleichbleibend hoher Qualität durch Beaufschlagung des in dem Zubereitungsgefäß enthaltenen Milchpulvers bzw. Getränkezubereitungspulvers mit dem mindestens einen aus dem Heißwasserstrahlerzeuger austretenden Heißwasserstrahl erzeugt wird.

In dem in der Vorrichtung gemäß Anspruch 2 vorgesehenen Heißwasserstrahlerzeuger ist mindestens ein Heißwasserkanal ausgebildet, der mindestens einen Heißwasserstrahl erzeugt, welcher in das an der Vorrichtung positionierte, von dieser entnehmbare abnehmbare, Milchpulver bzw. selbstlösliches Getränkezubereitungspulver beinhaltende Zubereitungsgefäß an oder nahe dessen Innenwand gerichtet ist. Erfindungsgemäß ist das Zubereitungsgefäß an der Vorrichtung angebracht und mit einem seitlich nach unten geführten Auslauf ausgebildet, aus dem der in dem Zubereitungsgefäß aufgeschäumte Milchschaum bzw. das bereitete Getränk in das Auffanggefäß überfließt. Somit nimmt das Auffanggefäß selbsttätig den in dem Zubereitungsgefäß aufgeschäumten Milchschaum bzw. bereitete Getränk auf, nachdem das in das Zubereitungsgefäß dosierte Milchpulver bzw. selbstlösliche Getränkezubereitungspulver mit dem Heißwasserstrahl durchdrungen ist und unter Einschluss von Luft Milchschaum oder ein schaumhaltiges Getränk entstanden ist.

Die oben erwähnte lösbare Anbringung und Positionierung des Zubereitungsgefäßes an der Vorrichtung und damit zu einem positioniert angeordneten Auffanggefäß gewährleistet, dass das in dem Zubereitungsgefäß entstehende Produkt kontrolliert in das Auffanggefäß gelangt. An die Aufmerksamkeit und Geschicklichkeit des Bedienungspersonals brauchen keine hohen Anforderungen gestellt zu werden. Außerdem kann durch die lösbare Anbringung des Aufschäumgefäßes an der Vorrichtung eine Verbrühungsgefahr des Bedienungspersonals herabgesetzt bzw. vermieden werden.

In dem in der Vorrichtung gemäß Anspruch 3 ausgebildeten Heißwasserstrahlerzeuger ist mindestens ein Heißwasserkanal in einer Ebene im Abstand zu einer zentralen Achse des Wasserstrahlerzeugers und/oder des Zubereitungsgefäßes nach unten tangential geneigt. Von dem in dieser Weise ausgebildeten Heißwasserkanal wird jeweils ein schräg nach unten geneigter, gerader Heißwasserstrahl abgegeben, der auf das Milchpulver bzw. selbstauflösliche Getränkezubereitungspulver auf dem Boden des Zubereitungsgefäßes trifft, welches in das Zubereitungsgefäß dosiert ist, und aufgrund der durch seine kinetische Energie erzeugten zirkulierenden wirbelnden Bewegung die durch Umlenkung des Heißwasserstrahls an der bevorzugt zylindrischen Innenwand des Zubereitungsbehälters entsteht, das Zubereitungspulver intensiv mit dem Heißwasser durchmischt und die Schaumbildung verbessert. Durch die zirkulierende Bewegung des Milchschaums wird außerdem eine kontrollierte Entleerung des aus dem Zubereitungsgefäß überbordenden Milchschaums in das Auffanggefäß, vorzugsweise eine Tasse, gefördert.

Eine bevorzugte Ausbildung des in der Vorrichtung eingesetzten Heißwasserstrahlerzeugers als besonders wirksamer Heißwasserbrausekopf ist in Anspruch 4 angegeben. Dieser rotationssymmetrische Heißwasserbrauskopf mit den nahe einer äußeren Mantelfläche des Heißwasserbrausekopfs gegenüber der Senkrechten in Umfangsrichtung geneigten Heißwasserkanälen kann Heißwasserstrahlen erzeugen, die mit Drall nach unten gerichtet aus den Heißwasserkanälen austreten. Wenn die Heißwasserkanäle zusätzlich gegenüber einer senkrechten zentralen Achse radial nach außen geneigt sind, erhalten die Heißwasserstrahlen eine entsprechende Richtungskomponente radial schräg nach außen. Die Heißwasserstrahlen sind in das an der Vorrichtung fixierte, abnehmbare, innen vorzugsweise im Wesentlichen zylindrische Zubereitungsgefäß gerichtet, das bevorzugt koaxial zu dem Heißwasserbrausekopf positioniert ist. Damit werden die Heißwasserstrahlen vorzugsweise an oder nahe der Innenwand des Zubereitungsgefäßes in dieses gerichtet, so dass sie das Pulver in dem Zubereitungsgefäß in gleichmäßiger Verteilung beaufschlagen, auch aufgrund ihres Dralls einen umlaufenden Wirbel erzeugen und ein homogenes Durchmischen des Pulvers sowie Aufschäumen erreichen, bevor der Milchschaum aus dem Zubereitungsgefäß kontrolliert in das Auffanggefäß fließt, das wiederum gemäß Anspruch 2 bezüglich des Zubereitungsgefäßes positioniert ist.

Es ist möglich, einen für das Lösen des Pulvers mit Heißwasser und gegebenenfalls Aufschäumen in dem Zubereitungsgefäß wirksamen umlaufenden Wirbel, der das Ausfließen in das Auffanggefäß fördern kann, mit einem einfachen Heißwasserbrausekopf nach Anspruch 5 zu erzeugen, in dem mehrere Heißwasserkanäle nahe einer Außenfläche des Heißwasserbrausekopfs in Abständen zueinander gerade und allenfalls radial nach au-βen geneigt ausgeformt sind, wobei der Heißwasserbrausekopf bezüglich des im Wesentlichen zylindrischen Zubereitungsgefäßes exzentrisch und nach unten geneigt angeordnet ist, so dass die Heißwasserstrahlen zumindest teilweise tangential und schräg nach unten auf einen Innenwandbereich des Zubereitungsgefäßes treffen. Die vorzugsweise im Wesentlichen zylindrische Innenwand wird hier also im Unterschied zu der weiter oben dargestellten bevorzugten Ausführungsform nicht gleichmäßig über deren Umfang beaufschlagt.

Statt eines Heißwasserbrausekopfs kann nach Anspruch 6 eine einzelne Düse als Heißwasserstrahlerzeuger dienen. Indem diese Düse bezüglich des innen vorzugsweise im Wesentlichen zylindrischen Zubereitungsgefäßes exzentrisch und nach unten geneigt angeordnet ist, so dass der Heißwasserstrahl tangential schräg nach unten auf einen Innenwandbereich des Zubereitungsgefäßes trifft, kann ebenfalls ein umlaufender Wirbel in dem Bodenbereich des Zubereitungsgefäßes erzeugt werden, wobei allerdings die Düse das zirkulierende selbstauflösende Pulver nur in dem Innenwandbereich beaufschlagt, auf den sie gerichtet ist.

Um das selbstauflösende Pulver auch im zentralen Bodenbereich des Zubereitungsgefäßes zu beaufschlagen, ist nach Anspruch 7 in dem Heißwasserbrausekopf in der fiktiven zentralen Achse des Heißwasserbrausekopfs oder parallel nahe der zentralen Achse wenigstens ein weiterer Heißwasserkanal ausgeformt.

Zu dem gleichen Zweck ist in dem Fall, in dem der Heißwasserstrahlerzeuger durch eine bezüglich des Zubereitungsgefäßes exzentrisch nach unten geneigt angeordnete Düse realisiert ist, diese exzentrische Düse nach Anspruch 8 mit einer weiteren Düse ergänzt, die konzentrisch zu dem vorzugsweise innen im Wesentlichen zylindrischen Zubereitungsgefäß nach unten auf dessen Boden gerichtet ist.

Wie oben erwähnt gehört zur Ausübung des erfindungsgemäßen Verfahrens und der dazu vorgesehenen Vorrichtung ein hieran angepasstes Zubereitungs- bzw. Aufschäumgefäß mit einem seitlichen und/oder nach unten geführten Auslauf, unter dem gemäß Anspruch 9 das oben offene Auffanggefäß positioniert wird. Als Auslauf kann einfach aus dem oberen Randbereich des Zubereitungsgefäßes nach Anspruch 10 eine Ausgussschnaupe ausgeformt sein. Nachdem das Zubereitungsgefäß an der Kaffeemaschine in einer bestimmten Position angebracht ist und das oben offene Auffanggefäß, insbesondere eine Tasse, gemäß Anspruch 9 unter dem Auslauf positioniert ist, kann der in dem Zubereitungsgefäß entstehende Milchschaum bzw. das Getränk über den Auslauf direkt sauber in das Auffanggefäß fließen.

Das Zubereitungsgefäß ist insbesondere an die Mittel zu dessen Positionierung und lösbaren Anbringung an der Vorrichtung angepasst.

In einer rein mechanischen Ausbildung der Mittel zur Positionierung und Anbringung des Zubereitungsgefäßes nach Anspruch 11 sind diese durch eine ringförmige Aufnahmevorrichtung realisiert. Diese bildet eine offene Aufnahmefläche, in die das passende Zubereitungsgefäß lösbar eingesteckt bzw. eingehängt werden kann, das dann von der Aufnahmevorrichtung gehalten wird. Hierzu weist das angepasste Zubereitungsgefäß an seinem Boden und darüber Querschnitte auf, die der Aufnahmefläche ähnlich und kleiner als diese sind. Nur an einem oberen Randbereich steht das Aufschäumgefäß nach außen vor, so dass es sich auf der ringförmigen Aufnahmevorrichtung abstützen kann. Bevorzugt ist die Aufnahmevorrichtung im Wesentlichen einfach kreisringförmig und das angepasste Zubereitungsgefäß mit Ausnahme des oberen Randbereichs im Wesentlichen zylindrisch.

Zur Einstellung eines Neigungswinkels des Zubereitungsgefäßes, der weiter unten erläutert wird, kann die ringförmige Aufnahmevorrichtung nach Anspruch 12 schwenkbar gelagert sein.

Alternativ können an der Vorrichtung als Mittel zur Positionierung und magnetischen Anbringung des Zubereitungsgefäßes nach Anspruch 13 eine Positionslehre und ein stationärer, axial polarisierter Scheibenmagnet angeordnet sein. Das hieran angepasste formstabile Zubereitungsgefäß weist als Andockmittel seitlich ein ferromagnetisches Bauteil auf, mit dem das Zubereitungsgefäß in der mittels der Positionslehre ausgerichteten Position an dem Scheibenmagneten lösbar gehalten wird. Der axial polarisierte Scheibenmagnet und das ferromagnetische Bauteil können statt der obigen Zuordnung auch analog umgekehrt an dem Zubereitungsgefäß bzw. der Vorrichtung angeordnet sein.

Eine besonders bevorzugte Ausbildung der Mittel zur Positionierung und magnetischen Anbringung des Zubereitungsgefäßes beruht gemäß Anspruch 14 darauf, dass an der Vorrichtung ein erster axial polarisierter Scheibenmagnet mit zwei einander entgegengesetzten magnetischen Polen angeordnet ist. Das zugehörige vorzugsweise formstabile Zubereitungsgefäß weist hier seitlich einen zweiten axial polarisierten Scheibenmagneten mit zwei zweiten einander entgegengesetzten magnetischen Polen auf, der insoweit ähnlich oder gleich wie der erste Scheibenmagnet an der Vorrichtung ausgebildet ist. Die Scheibenmagnete sind jeweils so an der Vorrichtung und an dem Zubereitungsgefäß angeordnet, dass sich im angedockten Zustand des Aufschäumgefäßes jeweils einer der Nordpole und einer der Südpole der beiden Scheibenmagnete gegenüberliegen, d.h. sich zwei Paare jeweils einander entgegengesetzt polarisierter Pole anziehen.

Das selbsttätige Überleiten bzw. kontrollierte Fließen des Milchschaums oder Getränks aus dem Zubereitungsgefäß in das Auffanggefäß kann dadurch erleichtert werden, dass nach Anspruch 1 5 die Mittel zur Positionierung und Anbringung des Zubereitungsgefäßes so ausgebildet und an der Vorrichtung angeordnet sind, dass das Zubereitungsgefäß um einen spitzen Winkel gegenüber der Horizontalen geneigt an der Vorrichtung gehalten wird. Ein unkontrolliertes Überlaufen des Zubereitungsgefäßes wird dadurch verhindert.

Die Angaben zur Positionierung des Zubereitungsgefäßes in einer um einen spitzen Winkel gegenüber der Horizontalen geneigten Position beziehen sich auf eine übliche horizontale Aufstellung einer Espressomaschine bzw. der Vorrichtung.

Der Winkel, in dem das Zubereitungsgefäß gegenüber der Horizontalen geneigt positioniert wird, beträgt nach Anspruch 16 vorzugsweise 3 bis 15°.

Dementsprechend kann die weiter oben erläuterte ringförmige Aufnahmevorrichtung um den spitzen Winkel zur Horizontalen geneigt ausgerichtet sein.

Bei den oben erläuterten Mitteln zum Positionieren und magnetischen Anbringen des Zubereitungsgefäßes ist zum Andocken bzw. Anbringen des Zubereitungsgefäßes an der Vorrichtung in einer um den spitzen Winkel zur Horizontalen schräg geneigten Position zumindest einer der beiden Scheibenmagnete um eine gedachte horizontale Achse gedreht, die rechtwinklig durch den betreffenden Scheibenmagneten verläuft, der an der Kaffeemaschine bzw. dem Aufschäumgefäß angebracht ist. Damit wird das Zubereitungsgefäß durch magnetisch hervorgerufene Kräfte bzw. Drehmomente selbsttätig beim Heranführen an die Vorrichtung ausgerichtet und dann in der ausgerichteten Position gehalten. Somit erfordert der Andockvorgang nur wenig Aufmerksamkeit des Bedienungspersonals.

Die voranstehend beschriebene Vorrichtung zur Ausübung des Verfahrens nach Anspruch 1 kann integraler Bestandteil einer Espressomaschine nach Anspruch 17 sein. In diesem Fall können vorteilhaft Funktionseinheiten der Espressomaschine, wie dessen Frischwasserbehälter, Heißwasserdruckerzeuger, insbesondere Pumpe, Wassererhitzer, insbesondere Durchlauferhitzer, durch ausgangsseitige Umschaltung des Wassererhitzers alternativ zur Erzeugung von Milchschaum oder eines Getränks aus Milchpulver bzw. selbstlöslichem Getränkezubereitungspulver genutzt werden.

In diesem Fall ist zweckmäßig nach Anspruch 18 wenigstens ein Auslaufrohr der Espressomaschine für Espresso/Kaffee so angeordnet, dass das zur Aufnahme von Espresso/Kaffee aufgestellte Auffanggefäß zugleich zur Aufnahme von Milchschaum bzw. Getränk aus dem Zubereitungsgefäß positioniert ist. Das Bedienpersonal braucht so keine verschiedenen Aufstellungen des Aufnahmegefäßes zu beachten. Ohne Umplatzierung kann das Aufnahmegefäß z.B. erst Kaffee und darüber Milchschaum aufnehmen.

Ein zur Verwendung an der Vorrichtung bzw. Espressomaschine mit den voranstehend erörterten Merkmalen geeignetes Zubereitungsgefäß besteht in einer besonders einfachen Ausführungsform in einem oben offenen Topf, aus dessen oberen Randbereich die Ausgussschnaupe insbesondere zum trägen Auslauf von Milchschaum ausgeformt ist.

Zur Verwendung des voranstehenden Zubereitungsgefäßes in einer Vorrichtung bzw. Espressomaschine mit einer ringförmigen Aufnahmevorrichtung nach Anspruch 11 ist das Zubereitungsgefäß mit einem oberen Randbereich ausgebildet, der über daran anschließenden tieferen Bereich des Topfes nach außen übersteht. Somit kann das Zubereitungsgefäß in die ringförmige Aufnahmevorrichtung zuverlässig eingehängt werden.

Die beiden voranstehenden Ausführungsformen des Zubereitungsgefäßes können formstabil wieder verwendbar ausgebildet sein. Sie können deswegen zwischen zwei Zubereitungs- bzw. Aufschäumvorgängen aus der Aufnahmevorrichtung entnommen, gereinigt und wieder eingesetzt werden.

Besonders vorteilhaft kann ein Zubereitungsgefäß als Portionspackung und Wegwerfartikel mit den Merkmalen realisiert sein, dass der Topf dünnwandig im Wesentlichen zylindrisch ausgebildet ist, dass der obere Randbereich des Topfes im Wesentlichen flach kreisringförmig ausgebildet ist und durch einen mit dem Randbereich verschweißten Deckel verschlossen ist, wobei der geschlossene Topf eine Portion aufschäumbaren Milchpulvers enthält. Dieses Zubereitungsgefäß dient zur Verwendung an einer Vorrichtung bzw. Espressomaschine, deren Aufnahmevorrichtung für das Zubereitungsgefäß im Wesentlichen kreisringförmig ist.

Speziell kann der Deckel als Abrissfolie mit einer Abrisslasche ausgebildet sein, wobei die Abrisslasche mit dem flach kreisringförmigen Randbereich des Topfes verschweißt ist. In einer solchen Portionspackung kann eine vorportionierte Menge Milch- bzw. Getränkezubereitungspulver, die bis zu ihrer Verwendung in dem geschlossenen Topf hygienisch aufbewahrt wurde, vor dem Aufschäum- bzw. Zubereitungsvorgang durch Abziehen der Abrissfolie einfach freigelegt werden.

Zweckmäßig kann der Topf des als Wegwerfartikel konzipierten Zubereitungsgefäßes aus einem feuchtigkeitsdichten, aromadichten und sauerstoffundurchlässigen Werkstoff bestehen und eine materialsparende Dicke von 15 - 80 µm aufweisen. Trotz der verhältnismäßig geringen Dicke des Topfes kann die Milchpulver- bzw. Getränkezubereitungsportion in diesem lange unbeschadet aufbewahrt werden.

Dies gilt besonders, wenn der Deckel ähnlich dem Topf aus einem feuchtigkeitsdichten, aromadichten und sauerstoffundurchlässigen Werkstoff ausgebildet ist.

Als feuchtigkeitsdichter, aromadichter und sauerstoffundurchlässiger Werkstoff eignet sich für den Topf und/oder Deckel insbesondere Aluminium.

Statt dessen kann der Topf und/oder Deckel aber auch aus reinem Kunststoff bestehen.

Besonders günstige Eigenschaften kann ein Topf aus einer Mehrschichtfolie aufweisen.

Eine solche Mehrschichtfolie ist vorzugsweise ein Karton/Aluminium/Kunststofrverbund.

Für den Fall, in dem das Zubereitungsgefäß magnetisch an einem an der Vorrichtung bzw. Espressomaschine angeordneten ersten Scheibenmagneten ausgerichtet und angebracht bzw. angedockt werden soll, ist das Zubereitungsgefäß vorzugsweise nicht als Wegwerfartikel ausgebildet, sondern als formstabil ausgebildeter, wieder verwendbarer Topf aus Kunststoff. In diesem Fall ist an dem Topf der zweite Scheibenmagnet angebracht. Der zweite Scheibenmagnet ist zur selbsttätigen Ausrichtung des Topfes an der Vorrichtung bzw. Espressomaschine axial polarisiert und weist zwei einander entgegengesetzte magnetische Pole auf, die mit einer geeigneten Polanordnung des ersten Scheibenmagneten zusammenwirken.

Ausführungsbeispiele der erfindungsgemäßen Vorrichtung zur Zubereitung und Verabreichung von Milchschaum oder eines Getränks aus Milchpulver bzw. selbstlöslichem Getränkezubereitungspulver sowie des hieran angepassten Zubereitungsgefäßes werden nachfolgend anhand einer schematisierten Zeichnung mit folgenden Figuren beschrieben, in denen zeigen:
- Figur 1: eine Vorderansicht auf eine Espressomaschine mit einer ersten Ausführungsform einer integrierten Vorrichtung und mit angehängtem Zubereitungsgefäß,
- Figur 2: eine Seitenansicht auf das Zubereitungsgefäß gemäß Figur 1,
- Figur 3: eine Draufsicht auf das Zubereitungsgefäß gemäß Figur 2.
- Figur 4: eine Vorderansicht auf eine Espressomaschine mit einer zweiten Ausführungsform einer integrierten Vorrichtung sowie mit einem in unterbrochenen Linien angedeuteten Zubereitungsgefäß,
- Figur 5: eine Vorderansicht auf die Ausführungsform des Zubereitungsgefäßes gemäß Figur 4,
- Figur 6: eine Ansicht auf die Rückseite des Zubereitungsgefäßes gemäß Figur 5,
- Figur 7: eine Draufsicht auf das Zubereitungsgefäß gemäß den Figuren 5 und 6,
- Figur 8a: eine Seitenansicht als Ausschnitt auf eine dritte Ausführungsform der Vorrichtung,
- Figur 8b: eine Draufsicht auf die Vorrichtung gemäß Fig. 8a und
- Figur 9: eine Vorderansicht auf eine vierte Ausführungsform der Vorrichtung als autarkes Gerät.

Die Darstellungsmaßstäbe in den Figuren können unterschiedlich sein.

Übereinstimmenden Elementen der Ausführungsformen sind in der Regel die gleichen Bezugszeichen zugeordnet.

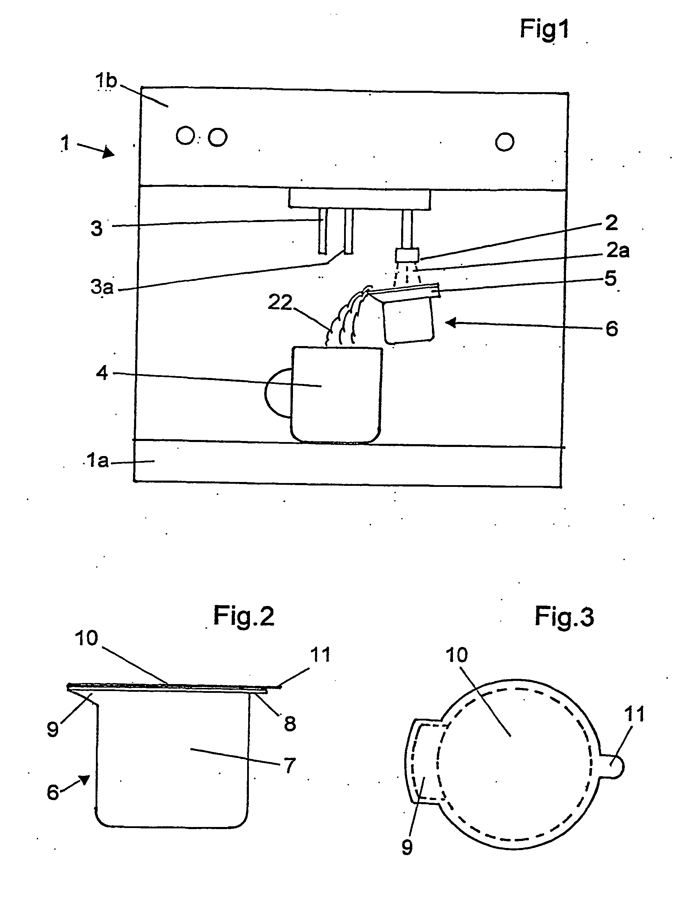

In Figur 1 ist mit 1 eine Espressomaschine mit integrierter Vorrichtung zur Zubereitung und Verabreichung von Milchschaum oder eines Getränks aus Milchpulver bzw. selbstlöslichem Getränkezubereitungspulver bezeichnet, auf deren Vorderseite jeweils ein Heißwasserbrausekopf 2 sowie im Abstand daneben Ablaufrohre 3, 3a für Espresso und Kaffee bzw. Cappuccino angeordnet sind. Der Heißwasserbrausekopf 2 steht in der Espressomaschine, in der Zeichnung nicht sichtbar dargestellt, mit einem Wassererhitzer und einem Heißwasserdruckerzeuger, insbesondere einer Pumpe, in Verbindung.

Weiterhin in Figur 1 nicht erkennbar sind die üblichen Mittel zur Espresso- oder Kaffee- bzw. Cappuccino-Zubereitung, die ebenfalls mit dem Wassererhitzer und dem Wasserdruckerzeuger in Verbindung stehen. Im Abstand unter einem Kopfteil 1 b der Espressomaschine, aus dem die Ablaufrohre 3, 3a für Espresso bzw. Kaffee sowie der Heißwasserbrausekopf 2 nach unten herausragen, befindet sich ein Fuß 1 a der Espressomaschine, auf dem ein Auffanggefäß 4 unter den Ablaufrohren 3, 3a abgestellt werden kann.

Der Heißwasserbrausekopf 2 beinhaltet - in der Zeichnung nicht sichtbar - Heißwasserkanäle, die innen nahe der zylindrischen Außenwand des Heißwasserbrausekopfs 2 angeordnet sind und in Umfangsrichtung des Heißwasserbrausekopfs geneigt sind.

Unterhalb des Heißwasserbrausekopfs 2, jedoch im Abstand über dem Fuß 1 a der Espressomaschine, ragt aus deren Vorderseite eine ringförmige Aufnahmevorrichtung 5 heraus, von der in Figur 1 nur der äußere Rand eines Rings sichtbar ist, der hier eine kreisscheibenförmige offene Aufnahmefläche nach außen begrenzt. Die senkrecht zu der Zeichenebene orientierte Aufnahmefläche ist gemäß der in Figur 1 dargestellten seitlichen Neigung der ringförmigen Aufnahmevorrichtung 5 gegenüber der Horizontalen um einen spitzen Winkel geneigt. Die ringförmige Aufnahmevorrichtung 5 ist derart unter dem Heißwasserbrausekopf 2 angeordnet, dass das im Betrieb des Heißwasserbrausekopfs 2 aus diesem ausströmende Heißwasser vollständig in ein zylindrisches Aufschäumgefäß bzw. Zubereitungsgefäß 6 einströmt, welches in die ringförmige Aufnahmevorrichtung 5 eingesetzt ist. Das Zubereitungsgefäß 6 ist in der in den Figuren 2 und 3 detaillierter dargestellten Ausführungsform als Wegwerfartikel ausgebildet, und zwar als vor Gebrauch geschlossene Portionseinheit, die eine abgemessene Portion aufschäumfähigen Milchpulvers bzw. selbstlöslichen Getränkezubereitungspulvers beinhaltet. Im Einzelnen besteht dieses Zubereitungsgefäß 6 aus einem dünnwandigen, im Wesentlichen zylindrischen Topf 7 mit einem oberen flachen Randbereich 8, der im Wesentlichen kreisringförmig ist. An einer Stelle des oberen Randbereichs ist eine Ausgussschnaupe 9 ausgeformt. Der Topf 7 ist vor Gebrauch durch eine Abrissfolie 10 verschlossen, die mit dem oberen Randbereich 8 des Topfes feuchtigkeitsdicht, aromadicht und sauerstoffundurchlässig verschweißt ist und von der eine Abrisslasche 11 zum bequemen Entfernen der Abrissfolie absteht. Die Abrissfolie 10 und der Topf 7 bestehen aus feuchtigkeitsdichten, aromadichten und sauerstoffdurchlässigen Werkstoffen. Beispielsweise kann der Topf 7 aus einem derart geeigneten Kunststoff bestehen und die Abrissfolie 10 aus Aluminium.

Es könnte jedoch in Verbindung mit der Espressomaschine gemäß Figur 1 in die ringförmige Aufnahmevorrichtung 5 auch ein normalerweise offenes, wieder verwendbares Zubereitungsgefäß eingesetzt werden, welches dickwandig und robust ausgebildet ist und beispielsweise zur Reinigung nach einem Aufschäumvorgang aus der Aufnahmevorrichtung 5 entfernt werden kann und wieder eingesetzt werden kann.

Zur Milchschaumzubereitung - die Zubereitung eines Getränks aus selbstlöslichem Pulver würde analog erfolgen - wird das offene bzw. geöffnete Aufschäumgefäß bzw. Zubereitungsgefäß 6 in die ringförmige Aufnahmevorrichtung 5 so eingesetzt, dass sich die Ausgussschnaupe 9 an der tiefstmöglichen Stelle, wie in Figur 1 dargestellt, befindet. Das Zubereitungsgefäß 6 nimmt eine Milchpulverportion auf, die entweder in dem Zubereitungsgefäß 6 der Art einer Portionskapsel vorportioniert war oder aber in ein oben offen ausgebildetes Zubereitungsgefäß eingegeben wird. Unter der Ausgussschnaupe 9 ist das oben offene Auffanggefäß platziert, welches in einem früheren Vorgang gebrühten Espresso oder Kaffee beinhalten kann. Nach dieser Vorbereitung wird eine Heißwasserzuführung zu dem Heißwasserbrausekopf 2 aktiviert, wodurch das aus ihm ausströmende Heißwasser in dem Zubereitungsgefäß 6 mit Drall auf das Milchpulver trifft, dieses auflöst und sofort unter Luftbeimischung aufschäumt. Das entstehende Volumen Milchschaum fließt über die Ausgussschnaupe in das darunter aufgestellte Auffanggefäß 4, das hierzu bei geeigneter Platzierung auf dem Fuß 1a der Espressomaschine nach Espresso- bzw. Kaffeezubereitung nicht umgestellt zu werden braucht. Da die Arbeitsstellung des Zubereitungsgefäßes 6 in der Aufnahmevorrichtung 5 zu dem Heißwasserbrausekopf 2 festliegt, kann mit dieser Espressomaschine ohne Weiteres geschmacklich und visuell ansprechender Milchschaum gleichmäßiger Güte selbst von ungeübtem Bedienungspersonal bereitet werden.

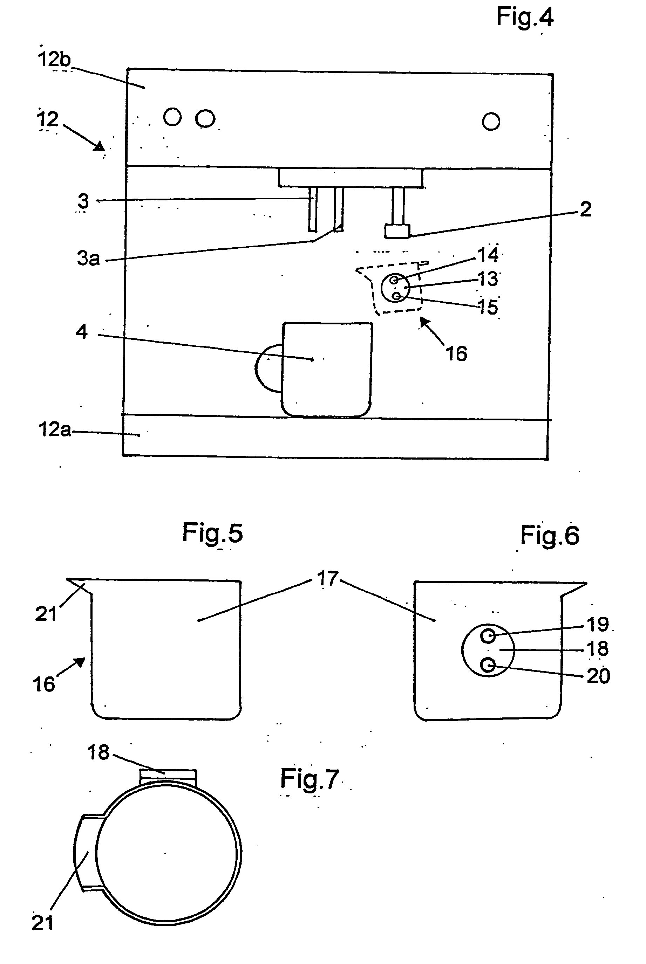

In Figur 4 ist die Espressomaschine 12 mit der zweiten Ausführungsform der Vorrichtung ebenfalls mit einem Fuß 12a und einem Kopfabschnitt 12b ausgebildet, aus dem die Ablaufrohre 3, 3a für Espresso bzw. Kaffee und die Heißwasserzuleitung für den Heißwasserbrausekopf 2 herausragen.

Im Unterschied zu der ersten Ausführungsform der integrierten Vorrichtung ist an der Vorderseite der Espressomaschine 12 in dem Bereich zwischen deren Fuß 12a und dem Heißwasserbrausekopf 2 ein erster Scheibenmagnet 13 fest angebracht, der so axial polarisiert und angeordnet ist, dass sein Südpol 14 und sein Nordpol 15 nicht genau vertikal übereinander angeordnet sind, sondern um einen spitzen Winkel seitlich, d.h. hier an der Vorderseite der Espressomaschine 12, gegenüber der Vertikalen geneigt. Diese Anordnung des Südpols 14 und des Nordpols 15 steht in Relation zu der Anordnung des Nordpols 19 und Südpols 20 des Scheibenmagneten 18 an dem Zubereitungsgefäß 16 und könnte auch anders sein, z.B. wenn der Nordpol 19 und der Südpol 20 des Scheibenmagneten 18 an dem Zubereitungsgefäß 16 im waagerechten Abstand zueinander angeordnet wären.

Zum lösbaren, ausgerichteten Anbringen eines Zubereitungsgefäßes 16 an dem ersten Scheibenmagneten 1 3 der Espressomaschine ist auch das Zubereitungsgefäß 16, und zwar dessen als oben offener Topf 17 ausgebildeter Teil seitlich mit einem axial polarisierten Scheibenmagneten 18 versehen, der auch als zweiter Scheibenmagnet 18 bezeichnet wird. Dessen Nordpol 19 und Südpol 20 sind im Abstand vertikal übereinander angeordnet, jedoch bezüglich der Anordnung des Südpols 14 und des Nordpols 15 des ersten Scheibenmagneten 13 an der Espressomaschine quasi entgegengesetzt bzw. verdreht, wie es eine Zusammenschau der Figuren 4 und 6 der Zeichnung verdeutlicht.

Im Unterschied zu dem zweiten ferromagnetischen Scheibenmagneten 18 besteht der Topf 17 des Zubereitungsgefäßes aus nicht ferromagnetischem Material, insbesondere aus einem Kunststoff. Das wieder verwendbare, immer oben offene Zubereitungsgefäß 16 weist in seinem oberen, nicht bezeichneten Randbereich, der hier nicht flach kreisringförmig über den zylindrischen Topf herauszustehen braucht, eine Ausgussschnaupe 21 auf.

Zur Zubereitung von Milchschaum wird das Zubereitungsgefäß 16 einfach an der Vorderseite der Kaffeemaschine 12, angedockt, indem es mit seinem zweiten Scheibenmagneten 18 an den ersten Scheibenmagneten 13 der Kaffeemaschine herangeführt wird. Infolge der durch die beiden Scheibenmagneten 13, 18 aufeinander wirkenden Kräfte wird das Zubereitungsgefäß 16 nicht nur an den ersten Scheibenmagneten 13 der Espressomaschine herangezogen, sondern auch seitlich gekippt ausgerichtet, wie mit der unterbrochenen Linie in Figur 4 veranschaulicht.
Vor einer Milchschaumzubereitung wird in das Zubereitungsgefäß 1 6 Milchpulver dosiert, wonach die Zubereitungswasserzuführung bzw. Heißwasserzuführung zu dem Heißwasserbrausekopf aktiviert werden kann, so dass auch hier, wie bei der ersten Ausführungsform gemäß Figur 1, Milchschaum bereitet wird, der über die Ausgussschnaupe 21 direkt in das unter ihr aufgestellte Auffanggefäß 4 überläuft.

In Figur 1 ist der überlaufende Milchschaum mit 22 bezeichnet, der in gleicher Weise in der Ausführungsform nach Figur 4 überläuft, dort jedoch nicht dargestellt ist.

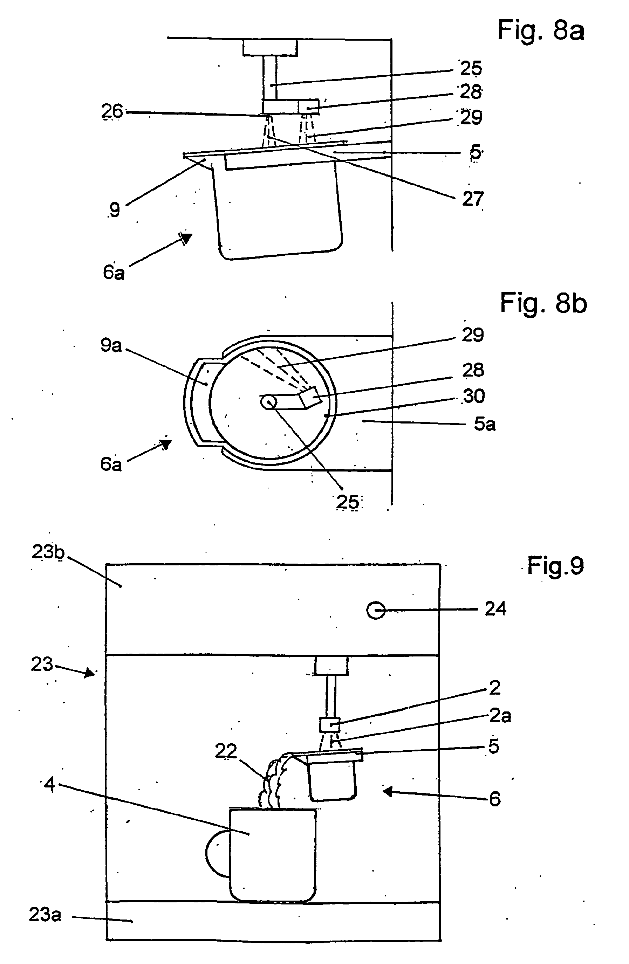

Die dritte Ausführungsform der Vorrichtung zur Zubereitung und Verabreichung von Milchschaum oder eines Getränks aus Milchpulver bzw. selbstlöslichem Getränkezubereitungspulver nach den Figuren 8a und 8b ist ausschnittsweise dargestellt, so dass diese integraler Bestandteil einer Espressomaschine wie in den Figuren 1 und 4 bei den Positionen 1 und 12 gezeigt sein könnte oder einen wesentlichen Außenbereich eines autarken Geräts nur zur Zubereitung und Verabreichung von Milchschaum oder eines Getränks aus selbstlöslichem Pulver ähnlich wie in Figur 9 darstellt.

Die in den Figuren 8a, 8b gezeigte dritte Ausführungsform weist statt eines zylindrischen Heißwasserbrausekopfs mit Heißwasserströmungskanälen unten an einem Heißwasserzufuhrstutzen 25 eine zentrale Düse 26 auf, die einen zentralen Heißwasserstrahl 27 in das im Wesentlichen koaxial in der Aufnahmevorrichtung 5a eingehängte Zubereitungsgefäß 6a auf dessen Bodenbereich richtet. Außerdem ist mit dem Heißwasserzufuhrstutzen 25 eine exzentrische Düse 28 sowohl mechanisch als auch strömungsmäßig über einen nicht bezeichneten Arm verbunden, der die exzentrische Düse 28 seitlich versetzt, wie in den Figuren 8a, 8b dargestellt, hält. Die Anordnung der exzentrischen Düse 28 ergibt sich weiterhin aus dem Verlauf des von ihr abgegebenen exzentrischen Heißwasserstrahls 29, der nach unten mit einer tangentialen Komponente zu der zylindrischen Zubereitungsbehälterinnenwand 30, und zwar deren Bodenbereich, gerichtet ist. Infolge dessen wird auch hier ein umlaufender Wirbel des Pulver-Heißwassergemischs in dem Zubereitungsgefäß 6a erzeugt, der eine gleichmäßige Durchmischung bewirken kann.

In Figur 9 ist eine Vorrichtung 23 zur Zubereitung und Verabreichung von Milchschaum oder eines Getränks aus Milchpulver bzw. selbstlöslichem Getränkezubereitungspulver als kompaktes autarkes Einzelgerät schematisch dargestellt. Es enthält einen Frischwasserbehälter, einen Wassererhitzer und einen Heißwasserdruckerzeuger, insbesondere eine Pumpe. Der Wassererhitzer steht über einen nicht bezeichneten Heißwasserstutzen, der aus einem Kopfabschnitt 23b der Vorrichtung nach unten herausragt, mit einem Heißwasserbrausekopf 2 wie in der ersten Ausführungsform nach Fig. 1 in Verbindung. Ebenso analog hält eine Aufnahmevorrichtung 5 ein Zubereitungsgefäß 6, z.B. mit Milchpulver, in schwacher Neigung, welches im Betrieb der Vorrichtung Milchschaum 22 kontrolliert in das Auffanggefäß 4 fließen lässt. Das Auffanggefäß 4 ist hierzu auf einem Fuß 23a der Vorrichtung unterhalb des Zubereitungsgefäßes 6 positioniert.

Das bedienungsfreundliche Gerät kann mit einem Schaltknopf 24 ein- und ausgeschaltet werden.

### Bezugszeichenliste

- 1: Espressomaschine
- 1a: Fuß der Espressomaschine
- 1b: Kopfabschnitt der Espressomaschine
- 2: Heißwasserbrausekopf
- 2a: Heißwasserstrahl
- 3: Ablaufrohr für Espresso bzw. Kaffee
- 3a: Ablaufrohr für Espresso bzw. Kaffee
- 4: Auffanggefäß
- 5: ringförmige Aufnahmevorrichtung
- 5a: Aufnahmevorrichtung (mit kreisscheibenförmiger Öffnung)
- 6: (zylindrisches) Zubereitungsgefäß
- 6a: Zubereitungsgefäß
- 7: Topf
- 8: oberer kreisförmiger Randbereich
- 9: Ausgussschnaupe
- 9a: Ausgussschnaupe
- 10: Abrissfolie
- 11: Abrisslasche
- 12: Espressomaschine
- 12a: Fuß
- 12b: Kopfabschnitt
- 13: erster Scheibenmagnet
- 14: Südpol
- 15: Nordpol
- 16: Zubereitungsgefäß
- 17: Topf
- 18: zweiter Scheibenmagnet
- 19: Nordpol
- 20: Südpol
- 21: Ausgussschnaupe
- 22: Milchschaum
- 23: Vorrichtung
- 23a: Fuß der Vorrichtung
- 23b: Kopfabschnitt der Vorrichtung
- 24: Schaltknopf
- 25: Heißwasserzufuhrstutzen
- 26: zentrale Düse
- 27: zentraler Wasserstrahl
- 28: exzentrische Düse
- 29: exzentrischer Heißwasserstrahl
- 30: Zubereitungsbehälterinnenwand

## Patentansprüche

1. Verfahren zur Zubereitung und Verabreichung von Milchschaum oder eines Getränks aus Milchpulver bzw. selbstlöslichem Getränkezubereitungspulver, mit einer Vorrichtung (1, 12),
in der das Milchpulver bzw. selbstlösliche Getränkezuberettungspulver in einem oben offenen bzw. geöffneten Zubereitungsgefäß (6, 6a, 16), insbesondere einem Aufschäumgefäß, mit mindestens einem Heißwasserstrahl beaufschlagt wird, der unter Heißwasserdruck aus einem Heißwasserkanal ausströmt, vorzugsweise mit mehreren Heißwasserstrahlen (2a, 27, 29) beaufschlagt wird, die unter Heißwasserdruck aus Heißwasserkanälen ausströmen, wodurch Milchschaum aufgeschäumt bzw. ein Getränk bereitet wird,
**dadurch gekennzeichnet,**
**dass** der Milchschaum (22) bzw. das Getränk im an der Vorrichtung (1, 12) fixierten Zubereitungsgefäß (6, 6a, 16) über einen seitlich nach unten geführten Auslauf des Zubereitungsgefäßes in ein Auffanggefäß (4), überfließt.

2. Vorrichtung zur Ausübung des Verfahrens nach Anspruch 1,
in der ein mit einem Heißwasserdruckerzeuger, insbesondere einer Wasserpumpe, und einem Wassererhitzer in strömungsmäßiger Verbindung stehender Heißwasserstrahlerzeuger (2, 26, 28) mindestens einen Heißwasserkanal aufweist, der mindestens einen Heißwasserstrahl erzeugt, welcher in das an der Vorrichtung (23) positionierte, von dieser entnehmbare, Milchpulver bzw. selbstlosliches Getränkezubereitungspulver beinhaltende oben offene bzw. geöffnete Zubereitungsgefäß (6, 6a, 16) an oder nahe dessen Innenwand zur Zubereitung von Milchschaum oder eines Getränks gerichtet ist,
**dadurch gekennzeichnet,**
**dass** das Zubereitungsgefäß (6, 6a, 16) an der Vorrichtung (23) angebracht ist und mit einem seitlich nach unten geführten Auslauf ausgebildet ist, aus dem der in dem Zubereitungsgefäß (6, 6a, 16) aufgeschäumten Milchschaum bzw. das bereitete Getränk in das Auffanggefäß (4) überfließt.

3. Vorrichtung nach Anspruch 2,
**dadurch gekennzeichnet,**
**dass** der Heißwasserstrahlerzeuger (2, 26, 28) mindestens einen Heißwasserkanal aufweist, der in einer Ebene im Abstand zu einer zentralen vertikalen Achse des Heißwasserstrahlerzeugers und/oder des Zubereitungsgefäßes (6, 6a, 16) nach unten tangential geneigt ist.

4. Vorrichtung nach Anspruch 2,
**dadurch gekennzeichnet,**
**dass** der Heißwasserstrahlerzeuger ein im Wesentlichen rotationssymmetrischer Heißwasserbrausekopf (2) ist, in dem mehrere Heißwasserkanäle in vorzugsweise gleichen Abständen zueinander nahe einer äu-βeren Mantelfläche des Heißwasserbrausekopfs gegenüber der Senkrechten in Umfangsrichtung geneigt sind und bevorzugt gegenüber einer senkrechten zentralen Achse auch radial nach außen geneigt sind und Heißwasserstrahlen (2a) erzeugen, die mit Drall nach unten und bevorzugt zusätzlich radial schräg nach außen in das an der Vorrichtung (23) fixierte, abnehmbare, Milchpulver bzw. selbstlösliches Getränkezubereitungspulver beinhaltende Zubereitungsgefäß (6, 16) gerichtet sind.

5. Vorrichtung nach Anspruch 2,
**dadurch gekennzeichnet,**
**dass** der Heißwasserstrahlerzeuger ein Heißwasserbrausekopf (2) ist, in dem mehrere Heißwasserkanäle nahe einer Außenfläche des Heißwasserbrausekopfs In Abständen zueinander gerade und allenfalls radial nach außen geneigt ausgeformt sind, und
**dass** der Heißwasserbrausekopf (2) bezüglich des innen vorzugsweise im Wesentlichen zylindrischen Zubereitungsgefäßes (6) exzentrisch und nach unten geneigt angeordnet ist, so dass die Heißwasserstrahlen (2a) zumindest teilweise tangential und radial schräg nach unten auf einen Innenwandbereich des Zubereitungsgefäßes (6) treffen.

6. Vorrichtung nach Anspruch 2,
**dadurch gekennzeichnet,**
**dass** als Heißwasserstrahlerzeuger mindestens eine Düse (28) dient, die bezüglich des innen vorzugsweise im Wesentlichen zylindrischen Zubereitungsgefäßes (6a) exzentrisch und nach unten geneigt angeordnet ist, so dass der Heißwasserstrahl (29) tangential und radial schräg nach unten auf einen Innenwandbereich (30) des Zubereitungsgefäßes trifft.

7. Vorrichtung nach einem der Ansprüche 3 bis 5,
**dadurch gekennzeichnet,**
**dass** in dem Heißwasserbrausekopf (2) wenigstens ein weiterer Heißwasserkanal in der zentralen Achse des Heißwasserbrausekopfs oder parallel nahe zu der zentralen Achse ausgeformt Ist.

8. Vorrichtung nach Anspruch 6,
**dadurch gekennzeichnet,**
**dass** der Heißwasserstrahlerzeuger eine weitere Düse (26) umfasst, die konzentrisch zu dem vorzugsweise innen zylindrischen Zubereitungsgefäß (6a) nach unten auf dessen Boden gerichtet ist.

9. Vorrichtung nach einem der Ansprüche 2 - 8,
**dadurch gekennzeichnet,**
**dass** das Auffanggefäß (4) unter einem in dem Zubereltungsgefäß (6, 6a, 18) ausgeformten Auslauf (9, 9a, 21) positionierbar ist.

10. Vorrichtung nach Anspruch 9,
**dadurch gekennzeichnet,**
**dass** als Auslauf eine Ausgussschnaupe (9, 9a, 21) aus einem oberen Randbereich (8) des Zubereitungsgefäßes (6, 6a, 16) ausgeformt ist

11. Vorrichtung nach einem der Ansprüche 2 - 10,
**dadurch gekennzeichnet,**
**dass** an der Vorrichtung (23) als Mittel zur Positionierung und Anbringung des Zubereitungsgefäßes (6) eine ringförmige Aufnahmevorrichtung (5) angebracht ist, in die das Zubereitungsgefäß (6) lösbar einsteckbar ist.

12. Vorrichtung nach Anspruch 11,
**dadurch gekennzeichnet,**
**dass** die ringförmige Aufnahmevorrichtung (5) schwenkbar ist.

13. Vorrichtung nach einem der Ansprüche 2 - 10,
**dadurch gekennzeichnet,**
**dass** an der Vorrichtung als Mittel zur Positionierung und Anbringung des Zubereitungsgefäßes eine Positionslehre und ein stationärer, axial polarisierter Scheibenmagnet (13) angeordnet sind und
**dass** das Zubereitungsgefäß (16) als Andockmittel seitlich ein ferromagnetisches Bauteil (18) aufweist, derart, dass das Zubereitungsgefäß in Anlage an der Positionslehre ausgerichtet an dem Scheibenmagneten (13) lösbar gehalten ist.

14. Vorrichtung nach einem der Ansprüche 2 - 10.
**dadurch gekennzeichnet,**
**dass** an der Vorrichtung als Mittel zur Positionierung und Anbringung des Zubereitungsgefäßes (16) ein erster axial polarisierter Scheibenmagnet (13) mit zwei einander entgegengesetzten magnetischen Polen (14, 15) angeordnet ist,
**dass** das Zubereitungsgefäß (16) als Andockmittel seitlich einen zweiten axial polarisierten Scheibenmagneten (18) mit zwei einander entgegengesetzten magnetischen Polen (19, 20) aufweist, der ähnlich oder gleich wie der erste Scheibenmagnet (13) an der Vorrichtung ausgebildet ist, jedoch bezüglich des zweiten Scheibenmagneten (13) an der Vorrichtung so angeordnet ist, dass sich im angedockten Zustand des Zubereitungsgefäßes Nordpole (15, 19) und Südpole (14, 20) der beiden Scheibenmagnete (13, 18) jeweils einander entgegengesetzt polarisiert gegenüberliegen.

15. Vorrichtung nach einem der Ansprüche 11 -14,
**dadurch gekennzeichnet,**
**dass** die Mittel zur Positionierung und Anbringung des Zubereitungsgefäßes (6, 6a, 16) so ausgebildet und an der Vorrichtung (23) angeordnet sind, dass das Zubereitungsgefäß (6, 6a, 16) um einen spitzen Winkel gegenüber der Horizontalen geneigt an der Vorrichtung (23) gehalten wird.

16. Vorrichtung nach Anspruch 15,
**dadurch gekennzeichnet,**
**dass** der Winkel 3 bis 15° beträgt.

17. Espressomaschine mit integrierter Vorrichtung gemäß einem der Ansprüche 2 - 16.

18. Espressomaschine nach Anspruch 17,
**dadurch gekennzeichnet,**
**dass** wenigstens ein Auslaufrohr (3, 3a) für Espresso/Kaffee so angeordnet ist, dass das zur Aufnahme von Espresso/Kaffee positionierte Auffanggefäß (4) zugleich zur Aufnahme von Milchschaum (22) bzw. Getränk aus der Vorrichtung bzw. dem Zubereitungsgefäß (6, 16) positioniert ist.

## Claims

1. Method for preparing and dispensing milk foam or a drink of milk powder or a self dissolving drink preparing powder comprising a device (1, 12)
in which the milk powder, or the self dissolving drink preparing powder, is treated in a preparation vessel (6, 6a, 16) open, or opened, on top, particularly a foaming vessel, with at least one hot water jet flowing under hot water pressure from a hot water duct, preferably with a plurality of hot water jets (2a, 27, 29) flowing under hot water pressure from hot water ducts, whereby milk foam is foamed up or a drink is prepared,
**characterized in**
**that** the milk foam (22), or the drink, in the preparation vessel (6, 6a, 16) fastened to the device (1) flows over via a downwardly-directed outflow on the side of the preparation vessel into a receiving cup (4).

2. Device for carrying out the method according to claim 1,
in which a hot water jet generator (2, 26, 28) in flow-wise connection with a hot water pressure generator, particularly a water pump, and a water heater includes at least one hot water duct which generates at least one hot water jet which is directed into the preparation vessel (6, 6a, 16) open, or opened, on top containing the milk powder or self dissolving drink preparation powder, positioned at, and removable from, the device (23), on or near the interior wall thereof to prepare milk foam or a drink,
**characterized in**
**that** the preparation vessel (6, 6a, 16) is attached to the device and is provided with a downwardly-directed outflow on the side from which the milk foam foamed up in the preparation vessel (6, 6a, 16), or the drink prepared, flows over into the receiving cup 4.

3. Device according to claim 2,
**characterized in**
**that** the hot water jet generator (2, 26, 28) includes at least one hot water duct which, in a plane spaced from a central vertical axis of the hot water jet generator and/or of the preparation vessel (6, 6a, 16), is tangentially inclined to the bottom.

4. Device according to claim 2,
**characterized in**
**that** the hot water jet generator substantially constitutes a rotation symmetrical hot water spraying head (2) within which a plurality of hot water ducts preferably equally spaced from one another are inclined, near an outer shell of the hot water spraying head, relative to the perpendicular in peripheral direction, and are preferably inclined relative to a perpendicular central axis radially towards the outside as well, generating hot water jets (2a) which are directed with a spin downward and, in addition, preferably radially obliquely to the outside into the preparation vessel (6, 16) attached to, and removable from, the device (23), and containing the milk powder or self dissolving drink preparation powder.

5. Device according to claim 2,
**characterized in**
**that** the hot water jet generator constitutes a hot water spraying head (2) within which a plurality of hot water ducts are formed out near an outer shell of the hot water spraying head spaced relative to one another straight and, if at all, radially inclined to the outside, and
**that** the hot water spraying head (2) is eccentrically and downwardly inclined relative to the preparation vessel (6) which preferably is substantially cylindrical in the interior so that the hot water jets (2a) at least partly impinge tangentially and radially obliquely downward onto one interior wall area of the preparation vessel (6).

6. Device according to claim 2,
**characterized in**
**that** as the hot water jet generator, at least one jet (28) is used which relative to the preparation vessel (6a) preferably substantially cylindrical in the interior, is eccentric and arranged downwardly inclined so that the hot water jet (29) impinges tangentially and radially obliquely downward onto an interior wall area (30) of the preparation vessel.

7. Device according to one of claims 3 through 5,
**characterized in**
**that** in the hot water spraying head (2) at least one further hot water duct is formed out either in the central axis of the hot water spraying head or parallel to the central axis.

8. Device according to claim 8,
**characterized in**
**that** the hot water jet generator comprises a further jet (26) concentrically directed relative to the preparation vessel (6a), preferably cylindrical in the interior, downwardly to the bottom thereof.

9. Device according to one of claims 2 through 6,
**characterized in**
**that** the receiving cup (4) can be positioned below an outflow (9, 9a, 21) formed out in the preparation vessel (6, 6a, 18).

10. Device according to claim 9,
**characterized in**
**that** as the outflow, an pouring lip (9, 9a, 21) is formed out from one upper edge area (8) of the preparation vessel (6, 6a, 16).

11. Device according to one of claims 2 through 10,
**characterized in**
**that** as a means for positioning and attaching the preparation vessel (6), the device (23) includes a ring-shaped support means (5) into which the preparation vessel (6) can removably be inserted.

12. Device according to claim 11,
**characterized in**
**that** the ring-shaped support means (5) is pivotable.

13. Device according to one of claims 2 through 10,
**characterized in**
**that** the device comprises as a means for positioning and attaching the preparation vessel, a position gauge and a stationary, axially polarized disc magnet (13) and
**that** the preparation vessel (16) includes, as a docking means, a ferromagnetic element (18) on the side such that the attached preparation vessel straightened out on the position gauge is removably held by the disc magnet (13).

14. Device according to one of claims 2 through 10,
**characterized in**
**that** the device comprises as a means for positioning and attaching the preparation vessel (16) a first axially polarized disc magnet (13) having two opposite magnetic poles (14, 15),
**that** the preparation vessel (16) includes on one side as a docking means a second axially polarized disc magnet (18) having two opposed magnetic poles (19, 20) shaped similar or identical to the first disc magnet (13) on the device, but is so arranged relative to the second disc magnet (13) on the device that, in the docked state of the preparation vessel, north poles (15, 19) and south poles (14, 20) of the two disc magnets (13, 18) face each other oppositely polarized.

15. Device according to one of claims 11 through 14,
**characterized in**
**that** means for positioning and attaching the preparation vessel (6, 6a, 16) are formed out and so provided on the device (23) that the preparation vessel (6, 6a, 16) is held inclined about an acute angle relative to the horizontal on the device (23).

16. Device according to claim 15,
**characterized in**
**that** the angle amounts from 3 to 15°.

17. Espresso machine with an integrated device according to one of claims 2 through 18.

18. Espresso machine according to claim 17,
**characterized in**
**that** at least one outflow tube (3, 3a) for espresso/coffee is arranged so that the receiving cup (4) positioned to receive espresso/coffee is at the same time positioned to receive milk foam (22), or a drink, from the device or the preparation vessel (6, 16).

## Revendications

1. Procédé de préparation et de distribution de mousse de lait ou d'une boisson composée de poudre de lait ou de poudre de préparation de boisson à solubilisation instantanée, au moyen d'un dispositif (1, 12), dans lequel la poudre de lait ou la poudre de préparation de boisson à solubilisation instantanée reçoit, dans un récipient de préparation (6, 6a, 16) ouvert par le haut, en particulier un récipient de moussage, au moins un jet d'eau chaude qui s'écoule d'un conduit d'eau chaude sous l'effet d'une pression, de préférence plusieurs jets d'eau chaude (2a, 27, 29) qui s'écoulent de conduits d'eau chaude sous pression, permettant ainsi de produire de la mousse de lait ou de préparer une boisson,
**caractérisé en ce que**
la mousse de lait (22) ou la boisson se trouvant dans le récipient de préparation (6, 6a, 16) fixé sur le dispositif (1, 12) se déverse dans un récipient collecteur (4) par une sortie du récipient de préparation guidée latéralement vers le bas.

2. Dispositif pour mettre en oeuvre le procédé selon la revendication 1, dans lequel un générateur de jets d'eau chaude (2, 26, 28), en communication fluidique avec un générateur de pression d'eau chaude, en particulier une pompe à eau, et un chauffe-eau, présente au moins un conduit d'eau chaude qui produit au moins un jet d'eau chaude qui est dirigé vers l'intérieur du récipient de préparation (6, 6a, 16) ouvert par le haut, contre ou à proximité de la paroi intérieure de celui-ci, lequel est positionné sur le dispositif (23) de façon amovible et contient de la poudre de lait ou de la poudre de préparation de boisson à solubilisation instantanée pour préparer de la mousse de lait ou une boisson,
**caractérisé en ce que**
le récipient de préparation (6, 6a, 16) est disposé sur le dispositif (23) et est pourvu d'une sortie guidée latéralement vers le bas, à partir de laquelle la mousse de lait produite dans le récipient de préparation (6, 6a, 16) ou la boisson préparée se déverse dans le récipient collecteur (4).

3. Dispositif selon la revendication 2,
**caractérisé en ce que**
le générateur de jets d'eau chaude (2, 26, 28) présente au moins un conduit d'eau chaude qui est incliné tangentiellement vers le bas dans un plan situé à distance d'un axe central vertical du générateur de jets d'eau chaude et/ou du récipient de préparation (6, 6a, 16).

4. Dispositif selon la revendication 2,
**caractérisé en ce que**
le générateur de jets d'eau chaude est une tête d'arrosage d'eau chaude (2) sensiblement symétrique en rotation, dans laquelle plusieurs conduits d'eau chaude sont inclinés par rapport à la verticale dans la direction périphérique, de préférence à égale distance les uns des autres, à proximité d'une surface d'enveloppe extérieure de la tête d'arrosage d'eau chaude, et, de préférence, sont inclinés également radialement vers l'extérieur par rapport à un axe central vertical, et produisent des jets d'eau chaude (2a) qui sont dirigés avec un tourbillon vers le bas et, de préférence, en outre, en biais radialetnent vers l'extérieur, dans le récipient de préparation (6, 16) fixé sur le Dispositif(23), amovible et contenant la poudre de lait ou la poudre de préparation de boisson à solubilisation instantanée.

5. Dispositif selon la revendication 2,
**caractérisé en ce que**
le générateur de jets d'eau chaude est une tête d'arrosage d'eau chaude (2) dans laquelle plusieurs conduits d'eau chaude sont formés à proximité d'une surface extérieure de la tête d'arrosage d'eau chaude à distance les uns des autres, en ligne droite et, éventuellement, inclinés radialement vers l'extérieur, et
**en ce que** la tête d'arrosage d'eau chaude (2) est disposée de manière excentrique et inclinée vers le bas par rapport au récipient de préparation (6), de préférence, sensiblement cylindrique à l'intérieur, de sorte que les jets d'eau chaude (2a) atteignent une région de la paroi intérieure du récipient de préparation (6) d'une manière au moins partiellement tangentielle et radialement oblique vers le bas.

6. Dispositif selon la revendication 2,
**caractérisé en ce que**
au moins une buse (28) sert de générateur de jets d'eau chaude, laquelle est disposée de manière excentrique et inclinée vers le bas par rapport au récipient de préparation (6a) sensiblement cylindrique à l'intérieur, de sorte que le jet d'eau chaude (29) atteint une région (30) de la paroi intérieure du récipient de préparation d'une manière tangentielle et radialement oblique vers le bas.

7. Dispositif selon l'une des revendications 3 à 5,
**caractérisé en ce que**,
au moins un autre conduit d'eau chaude est formé dans la tête d'arrosage d'eau chaude (2) dans l'axe central ou parallèlement à proximité de l'axe central de la tête d'arrosage d'eau chaude.

8. Dispositif selon la revendication 6,
**caractérisé en ce que**
le générateur de jets d'eau chaude comprend une autre buse (26) qui est orientée vers le bas de façon concentrique au récipient de préparation (6a), de préférence intérieurement cylindrique, sur le fond de celui-ci.

9. Dispositif selon l'une des revendications 2 à 8,
**caractérisé en ce que**
le récipient collecteur (4) peut être positionné au-dessous d'une sortie (9, 9a, 21) formée dans le récipient de préparation (6, 6a, 16).

10. Dispositif selon la revendication 9,
**caractérisé en ce que**
la sortie est un bec de coulée (9, 9a, 21) formé dans une région de bord (8) supérieure du récipient de préparation (6, 6a, 16).

11. Dispositif selon l'une des revendications 2 à 10,
**caractérisé en ce qu'**est disposé sur le dispositif(23), comme moyen de positionnement et de fixation du récipient de préparation (6), un dispositif de réception annulaire (5) dans lequel peut être encastré de façon amovible le récipient de préparation (6).

12. Dispositif selon la revendication 11,
**caractérisé en ce que**
le dispositif de réception annulaire (5) est apte à pivoter.

13. Dispositif selon l'une des revendications 2 à 10,
**caractérisé en ce que**
sont disposés sur le dispositif, comme moyens de positionnement et de fixation du récipient de préparation, un gabarit de positionnement et un aimant en forme de disque (13) fixe à polarisation axiale, et
**en ce que** le récipient de préparation (16) présente latéralement, comme moyen d'amarrage, un composant ferromagnétique (18) de façon telle que le récipient de préparation, orienté en appui contre le gabarit de positionnement, est maintenu de manière amovible contre l'aimant en forme de disque (13).

14. Dispositif selon l'une des revendications 2 à 10,
**caractérisé en ce qu'**est disposé sur le dispositif, comme moyen de positionnement et de fixation du récipient de préparation (16), un premier aimant en forme de disque (13) à polarisation axiale comportant deux pôles magnétiques (14, 15) opposés l'un à l'autre,
**en ce que** le récipient de préparation (16) présente latéralement, comme moyen d'amarrage, un deuxième aimant en forme de disque (18) à polarisation axiale comportant deux pôles magnétiques (19, 20) opposés l'un à l'autre, qui est de conception similaire ou identique au premier aimant en forme de disque (13) placé sur le dispositif, mais qui, par rapport au premier aimant en forme de disque (13) placé sur le dispositif, est disposé de façon telle que, à l'état amarré du récipient de préparation, les pôles nord (15, 19) et les pôles sud (14, 20) des deux aimants en forme de disque (13, 18) sont respectivement opposés l'un à l'autre et présentent une polarisation inverse.

15. Dispositif selon l'une des revendications 11 à 14,
**caractérisé en ce que** les moyens de positionnement et de fixation du récipient de préparation (6, 6a, 16) sont conçus et disposés sur le dispositif (23) de façon telle que le récipient de préparation (6, 6a, 16) est maintenu sur le dispositif (23) en étant incliné à angle aigu par rapport à l'horizontale.

16. Dispositif selon la revendication 15,
**caractérisé en ce que**
l'angle est compris entre 3 et 15°.

17. Machine expresso à dispositif intégré selon l'une des revendications 2 à 16.

18. Machine expresso selon la revendication 17,
**caractérisée en ce qu'**au moins un tuyau de sortie (3, 3a) d'expresso/café est disposé de façon que le récipient collecteur (4) positionné pour recevoir de l'expresso/café est en même temps positionné pour recevoir de la mousse de lait (22) ou une boisson provenant du dispositif ou du récipient de préparation (6, 16).
